# EUROPÄISCHE PATENTSCHRIFT

(11) **EP 0 926 805 B1**
(45) Veröffentlichungstag und Bekanntmachung des Hinweises auf die Patenterteilung: **27.04.2011**
(21) Anmeldenummer: 98123063.4
(22) Anmeldetag: 09.12.1998
(51) Int. Cl.: H02K 9/02, H02K 5/24, H02K 9/06, H02K 5/20

(54) **Durchzugsbelüftete elektrische Maschine**
Internally air-cooled electric machine
Machine électrique blindée ventilée

(30) Priorität: 23.12.1997 DE 19757604
(43) Veröffentlichungstag der Anmeldung: 30.06.1999
(73) Patentinhaber: SIEMENS AKTIENGESELLSCHAFT, 80333 München (DE)
(72) Erfinder: Hilneder, Siegfried, 91126 Schwabach (DE); Neumann, Jörg, Dipl.-Ing., 90489 Nürnberg (DE); Verhöven, Daniel Dipl.-Ing. (FH), 90491 Nürnberg (DE); Hümer, Thomas, Dipl.-Ing. (FH), 90451 Nürnberg (DE)

(56) Entgegenhaltungen:
- WO-A-97/41631
- DE-A- 4 337 463
- JP-A- 8 023 648
- JP-A- 53 143 903
- US-A- 4 465 948

## Beschreibung

Die Erfindung betrifft eine durchzugsbelüftete elektrische Maschine.

Bei durchzugsbelüfteten elektrischen Maschinen wird die im Aktivteil entstehende Verlustwärme abgeführt, indem Umgebungsluft durch das Maschineninnere geleitet wird. Dazu muß durch entsprechende Öffnungen des Maschinengehäuses Umgebungsluft angesaugt, durch die aktiven Teile der Maschine geleitet und als erwärmte Luft durch weitere Öffnungen wieder an die Umgebung abgegeben werden. (Handbuch für Elektromotoren von H. Rentzsch, 3. Auflage).

Es gibt dabei mehrere Varianten, die Kühlluftströme durch die Maschine zu leiten. Es sind dabei jeweils unterschiedliche Ansaug- bzw. Ausblaseöffnungen am Motorgehäuse erforderlich. So wird bei einigen Ausführungsformen durch zwei Öffnungen an der Gehäuseoberseite der Maschine Kühlluft angesaugt. Die beiden Luftströme werden symmetrisch (X-Belüftung) durch das genutete und geschlitzte Läufer- und Ständerblechpaket sowie direkt über die Wickelköpfe gelenkt und gelangen durch mehrere seitliche Öffnungen am Maschinengehäuse wieder nach außen. Durch diese Vielzahl von Öffnungen an den Gehäuseseiten der elektrischen Maschine gelangen ebenfalls Motorgeräusche nach außen.

Die Einhaltung geforderter Geräuschemissionswerte ist sehr aufwendig, da jede Öffnung des Maschinengehäuses mit Schalldämpfungsmaßnahmen versehen werden muß. Sämtliche Anbauten zur Reduzierung der Geräuschemissionen müssen zudem so ausgelegt sein, daß die geforderte Schutzart der Maschine eingehalten wird. Dabei vergrößert sich die Gesamtabmessung der elektrischen Maschine.

Das Dokument JP 53 143 903 zeigt eine durchzugsbelüftete elektrische Maschine mit einem Statorblechpaket mit radialen Kühlkanäleneinem Rotorblechpaket mit radialen Kühlkanälen, Luftaustauschöffnungen an einer Seite des Gehäuses sowie einem Aufsatz für die Luftführung.

Das Dokument JP 08 023 648 zeigt eine elektrische Maschine mit einem Statorblechpaket und Gehäuseinnenrippenzwischen dem Gehäuse und dem Statorblechpaket, wobei die Gehäuseinnenrippen stellenweise eine reduzierte Rippenhöhe aufweisen.

Die Aufgabe der Erfindung besteht demnach darin, die Geräuschemissionen einer durchzugsbelüfteten Maschine auf Werte einer geschlossenen Maschine zu reduzieren. Außerdem sollen die in der industriellen Praxis gebräuchlichen Schutzarten von elektrischen Maschinen eingehalten werden ohne dabei die äußeren Abmessungen gegenüber herkömmlichen durchzugsbelüfteten elektrischen Maschinen wesentlich zu vergrößern.

Die Lösung der gestellten Aufgabe gelingt durch eine elektrische Maschine, gemäß dem Anspruch 1.

Dabei wird eine große Aktivteiloberfläche sowohl im Ständer als auch im Läuferblechpaket der elektrischen Maschine vom Kühlluftstrom gleichmäßig durchsetzt und somit nahezu homogen gekühlt. Die Motorgeräusche treten im wesentlichen nur auf der einen offenen Seite des Maschinengehäuses aus. Damit sind auch nur dort Schalldämmungs/ bzw. -dämpfungsmaßnahmen erforderlich. Diese Maßnahmen können dadurch im wesentlichen auf den Aufsatz, der die Zu- und Abluftführung ermöglicht, beschränkt werden. Dadurch wird eine kompakte Bauweise des Mo-tors erreicht. überströmkanäle zwischen den axialen Kühlkanälen gestatten dem Abluftstrom in den Bereich der Luftaustrittsöffnungen des Maschinengehäuses zu gelangen.

Dieses Kühlprinzip ist unabhängig vom Herstellungsverfahren der Maschinengehäuse (Gußverfahren oder Schweißkonstruktionen) oder dem Maschinengehäusematerial einsetzbar.

In einer weiteren Ausgestaltung der elektrischen Maschine werden die Überströmkanäle durch reduzierte Rippenhöhe bestimmter Abschnitte der Gehäuseinnenrippe derart gebildet, daß sich außer der axialen Hauptströmungsrichtung des Kühlmediums tangentiale oder schraubenförmig verlaufende Überströmkanäle zwischen den axialen Kühlkanälen ergeben.

Es sind auch andere Strömungsausrichtungen bzw. -verläufe der Kühlkanäle bzw. Überströmkanäle denkbar. Entscheidend dabei ist die Erzielung einer optimalen Kühlung, die je nach Motortyp, Aufstellungsort der Maschine auch andere Gestaltung der Kühlkanäle bzw. der Überströmkanäle erfordern kann.

Vorteilhafterweise befinden sich die tangentialen Überströmkanäle im wesentlichen im Bereich der Stirnseiten der Ständerblechpakete. Damit tritt eine zusätzliche Kühlung der Wikkelköpfe ein.

In einer weiteren Ausgestaltung wird der Zuluftstrom über eine Umlenkvorrichtung des Aufsatzes in eine der Lufteintrittsöffnungen der elektrischen Maschine geleitet. Diese Umlenkvorrichtung erhöht die Schutzart der Maschine und verhindert den direkten Austritt des Luftschalls aus der Maschine. Die im Aufsatz vorhandene Schalldämpfungsauskleidung absorbiert zusätzlich den Luftschall. Durch die Umlenkvorrichtung tritt außerdem eine Verwirbelung des Zuluftstroms ein. Die Umlenkvorrichtung leitet den Luftstrom auf die Stirnseiten der Aktivteile der elektrischen Maschine. Der in Umfangsrichtung gleichmäßig verteilte Luftstrom wird nach Passieren der axialen Kühlkanäle über tangentiale Überströmkanäle nach oben geführt und dort ausgeleitet. Der Abluftstrom wird ähnlich dem Zuluftstrom innerhalb des Aufsatzes umgelenkt und abgeführt, wobei sich an den Umlenkstellen ebenfalls Schalldämpfungsauskleidung zur Luftschallabsorption befindet. Eine direkte Kopplung zwischen Motorgehäuse und Aufsatz wird durch Entkopplungsgummis an den Auflageflächen des Aufsatzes am Motorgehäuse verhindert. Somit kann sich kein Körperschall auf den Aufsatz übertragen.

Die Erfindung sowie weitere vorteilhafte Ausgestaltungen der Erfindung gemäß den Merkmalen der Unteransprüche und den Erläuterungen der Beschreibungseinleitung werden im folgenden anhand eines schematisch dargestellten Ausführungsbeispiels näher erläutert. Darin zeigt:
- FIG 1: ein Motorgehäuse in perspektivischer Darstel- lung ohne Aufsatz,
- FIG 2: eine Gehäusehalbschale eines Motorgehäuses im Querschnitt mit Gehäuseinnenrippen,
- FIG 3: eine Gehäusehalbschale eines Motors im Quer schnitt mit abschnittsweise reduzierten Rip penhöhen,
- FIG 4: Seitenansicht eines Aufsatzes mit axialer Luftzufuhr,
- FIG 5: Seitenansicht eines Aufsatzes mit radialer Luftzufuhr,
- FIG 6: Seitenansicht eines Motors mit Aufsatz.

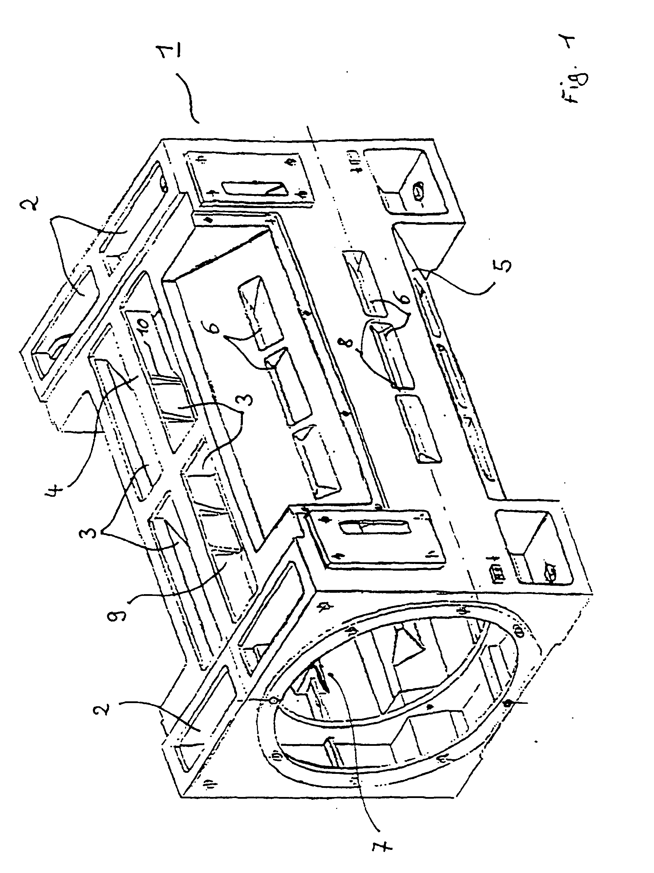

FIG 1 zeigt ein Motorgehäuse 1 mit an Stirnseiten des Motors befindlichen Kühlluftzuführöffnungen 2. Über einem nicht näher dargestellten Ständer- bzw. Läuferblechpaket befinden sich Luftaustrittsöffnungen 3. Diese Luftaustauschöffnungen 2, 3 befinden sich auf der Oberseite 4 des Motorgehäuses 1. Das Motorgehäuse 1 weist in seinem im wesentlichen zylindrischen Teil 5 V-förmige Gehäuseinnenrippen 6 auf, die eine Quersteifigkeit der Gehäuseinnenrippen 6 bei verringerten Materialeinsatz gewährleisten. Durch diese V-förmigen Gehäuseinnenrippen 6 ergibt sich in axialer Richtung eine konstante Quersteifigkeit der Gehäuseinnenrippe 6. Eine derartige Ausgestaltung der Gehäuseinnenrippe 6 kommt ohne zusätzliche innenliegende Abstützelemente aus. Dadurch wird eine ungehinderte axiale Strömung der Kühlluft in Kühlkanälen zwischen Ständerblechpaket und Gehäusewand 7 ermöglicht.

Außerdem weist der Rippenquerschnitt in alle Richtungen ein hohes Flächenmoment auf. Dadurch wird den Schwingungsanregungen des Motors in der achsparallelen horizontalen und vertikalen Schwingebene auch ein hoher lokaler Widerstand entgegengesetzt. Um den bei V-förmigen Gehäuseinnenrippen 6 auftretenden Ziehharmonikaeffekt zu vermeiden, sind abschnittsweise Versteifungsrippen 8 angebracht, die die tangentialen Spannungsanteile in der Gehäusewand 7 aufgrund des Fügedrucks aufnehmen.

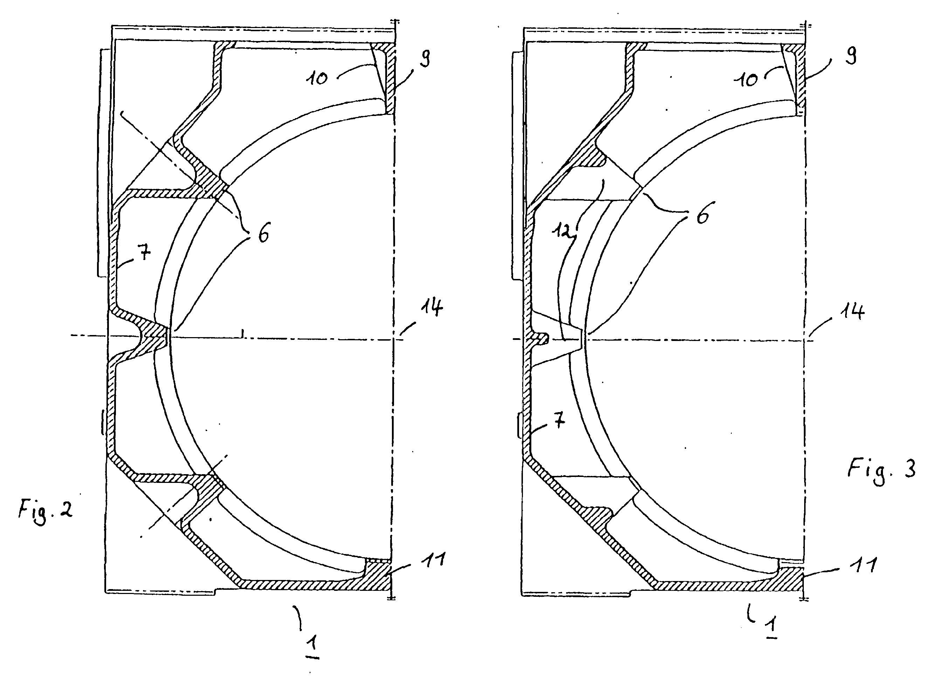

FIG 2 zeigt im Querschnitt eine gegossene Gehäusehalbschale mit V-förmig ausgebildeten Gehäuseinnenrippen 6, die eine Hauptvorzugsrichtung aufweisen, die sich bei der Herstellung als vorteilhaft erweist. Die obere Rippe 9 ist nicht in V-Form ausgeführt, da dies bei horizontal aufgestellten Motoren ein Wasserbecken bildet und somit dort verstärkte Korrissionserscheinungen auftreten können. Ein Versteifungselement 10 kann in diesem Fall von innen in die radiale Rippe 8 gesetzt werden. Die Fußrippe 11 ist ebenfalls nicht in V-Form ausgebildet, da die Rippenhöhe sehr niedrig ist.

FIG 3 zeigt im Querschnitt eine Gehäusehalbschale mit abschnittsweise reduzierter Höhe der Gehäuseinnenrippen 6, die neben einer achsparallelen Hauptströmungsrichtung des Kühlmediums zusätzliche Strömungskanäle 12 in Umfangsrichtung aufweisen, so daß erwärmte Kühlluft von der Unterseite des Motorgehäuses 1 nach oben gelangen kann. Die Abschnitte mit reduzierter Rippenhöhe richten sich u.a. nach Motortyp, Aufstellungsort und befinden sich im wesentlichen am Ende des Ständerblechpakets, um somit dort auch verstärkt zur Wickelkopfkühlung beizutragen. Die Abschnitte mit reduzierter Rippenhöhe können gußtechnisch auch dort realisiert werden, wo die Versteifungselemente 10 angeordnet sind.

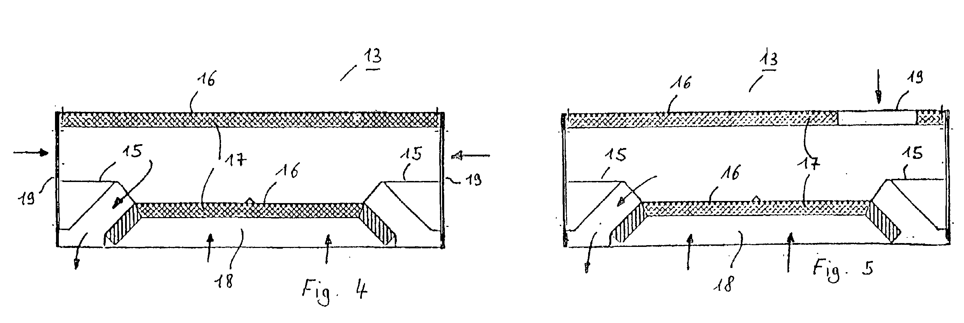

FIG 4 zeigt in Seitenansicht einen Aufsatz 13 mit achsparallele Kühlluftzufuhr, d.h. Luftzufuhr in axialer Richtung bzgl. der Motorachse 14, gestattet. Die Kühlluft gelangt in den im wesentlichen quaderförmigen Aufsatz 13 und wird dort durch Umlenkelemente 15 in die Lufteintrittsöffnungen 2 des Motorgehäuses 1 umgelenkt.

Diese Umlenkelemente 15 erfüllen zwei Funktionen. Zum einen gewährleisten sie eine vorgegebene Schutzart des Motors, zum anderen sorgen sie dafür, daß Schallemissionen aus den Lufeintrittsöffnungen 2 des Motors umgelenkt werden in Richtung der Wandungen 16 des Aufsatzes 13, die mit Schalldämpfungselementen 17 ausgekleidet sind. Durch den quaderförmigen Aufbau des Aufsatzes 13 sind Schalldämpfungselemente 17 montagefreundlich in einfachen rechteckigen Abschnitten auf die Innenseite des Aufsatzes 13 zu plazieren.

Eine im wesentlichen, in Seitenansicht betrachtet trapezförmige Aussparung 18 des quaderförmigen Aufsatzes 13 befindet sich über den Luftaustrittsöffnung 3 des Motorgehäuses 1. Von dort kann der austretende Luftstrom je nach Bedarf umgelenkt werden, d.h. es ist sowohl bzgl. der Motorachse 14 gesehen, linksseitiger, als auch rechtsseitiger Austritt des Kühlluftstroms möglich.

Die Flächen der trapezförmigen Ausnehmung 18 des Aufsatzes 13 sind ebenso mit Schalldämpfungselementen 17 umgeben, so daß austretender Schall aus den Luftaustrittsöffnungen 3 ebenfalls absorbiert wird. Es sind somit Schalldämmungs und - dämpfungsmaßnahmen nur an einer Seite des Gehäuses 1 notwendig, da Zu- und Abluftführung durch ein einziges Bauteil, den Aufsatz 13 wahrgenommen werden.

FIG 5 zeigt eine Ausführungsform, bei der die Kühlluft bezogen zur Motorachse 14 nicht in axialer Richtung in den Aufsatz 13 einströmt, sondern bzgl. der Motorachse 14 senkrecht in den Aufsatz 13 einströmt. Die Anordnung der Umlenkelemente 15 und die trapezförmige Aussparung 18 für die Abluft sind im wesentlichen wie in FIG 4 ausgeführt.

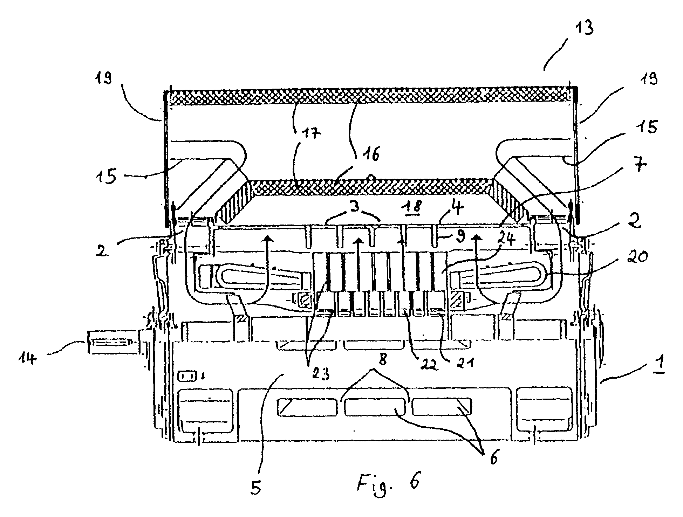

FIG 6 zeigt in Seitenansicht einen Motor mit Aufsatz 13, dessen Gehäuse 1 oberhalb der Achse aufgeschnitten dargestellt ist, um so schematisch den Verlauf eines Kühlluftstromes aufzuzeigen. Jeweils ein Kühlluftstrom tritt aus axialer Richtung in den Aufsatz 13 durch ein Gitter 19 oder ein Filter ein, und wird dort, wie in FIG 4 beschrieben, durch die Umlenkelemente 15 in die Lufteintrittsöffnungen 2 des Motorgehäuses 1 geleitet.

In dem Motorgehäuse 1 wird der Luftstrom zum Teil über die Wickelköpfe 20, als auch durch axiale Kühlkanäle 21 im Läuferblechpaket 22 und radiale Kühlkanäle 23 im Läuferblechpaket 22 und Ständerblechpaket 24 in die im wesentlichen axialen Kühlkanäle zwischen Gehäuse 1 und Ständerblechpaket 24 geführt. Tangentiale Überströmkanäle 12 ermöglichen der erwärmten Kühlluft auch von der Unterseite des Motors nach oben zu strömen und dort an den Luftaustrittsöffnungen 3 auszutreten, um durch eine Umlenkung an der trapezförmigen Ausnehmungen 18 des Aufsatzes 13 an die Umgebung abgegeben zu werden. Durch Variation des Aufsatzes 13 können verschiedene Möglichkeiten der Kühlluftzufuhr und -abfuhr bei immer gleichen Basismotoren realisiert werden. Dies erlaubt eine kompakte Bauweise des Motors, da seitliche Anbauten entfallen. Schalldämpfmaßnahmen sind einfach an diesen Aufsatz 13 zu integrieren, da Schallemissionen nur auf einer Seite des Gehäuses 1 austreten.

## Patentansprüche

1. Durchzugsbelüftete elektrische Maschine, die folgende Merkmale aufweist:
a) im Wesentlichen axiale Kühlkanäle zwischen Statorblechpaket (24) und Gehäuse (1), welche durch im Wesentlichen axial verlaufende, sich auf dem Statorblechpaket (24) abstützende Gehäuseinnenrippen (6) gebildet sind,
b) zwischen Statorblechpaket (24) und Gehäuse (1) angeordnete Überströmkanäle (12), welche sich zwischen den im Wesentlichen axialen Kühlkanälen befinden,
c) Läuferblechpaket (22) und/oder Statorblechpaket (24) mit im Wesentlichen axial und/oder radialen Kühlkanälen (21, 23),
d) Luftaustauschöffnungen (2, 3) mit der Umgebung, welche sich auf einer Seite des Gehäuses (1) befinden,
e) einen Aufsatz (13) für die Luftführung der Zu- und Abluft an die und von den Luftaustauschöffnungen (2, 3) des Gehäuses (1),
f) wobei die Gehäuseinnenrippen (6) V-förmig ausgebildet sind und Versteifungsrippen aufweisen.

2. Durchzugsbelüftete elektrische Maschine nach Anspruch 1,
**dadurch gekennzeichnet, daß** mehrere Gehäuseinnenrippen (6) eine reduzierte Rippenhöhe aufweisen, derart, daß sich neben der Hauptströmungsrichtung tangentiale oder schraubenförmig verlaufende Überstromkanäle (12) ergeben.

3. Durchzugsbelüftete elektrische Maschine nach Anspruch 2,
**dadurch gekennzeichnet, daß** sich die tangentialen Überstromkanäle (12) zwischen benachbarten Kühlkanälen im Bereich der Stirnseiten des Statorblechpaketes (24) befinden.

4. Durchzugsbelüftete elektrische Maschine nach einem der vorhergehenden Ansprüche, **dadurch gekennzeichnet, daß** über den Aufsatz (13) der Zuluftstrom über mindestens eine Umlenkvorrichtung (15) auf mindestens eine Stirnseite der elektrischen Maschine lenkbar ist, und der auf der Länge des Läufer- bzw. Statorblechpakets (24) der elektrischen Maschine in Gegenstromrichtung bzgl. des in die Maschine eintretenden Zuluftstroms austretende Abluftstrom in einem vom Zuluftstrom räumlich getrennten, über der elektrischen Maschine befindlichen Ausnehmung (18) des Aufsatzes (13) sich befindet, die eine nahezu beliebige Ausströmrichtung des Abluftstroms gestattet.

## Claims

1. Internally air-cooled electric machine having the following features:
a) substantially axial cooling channels between stator laminate stack (24) and housing (1), which are formed by housing inner ribs (6), which run substantially axially and are supported on the stator laminate stack (24),
b) overflow channels (12), which are arranged between the stator laminate stack (24) and the housing (1) and are located between the substantially axial cooling channels,
c) rotor laminate stack (22) and/or stator laminate stack (24) with substantially axial and/or radial cooling channels (21, 23),
d) air exchange openings (2, 3) with the surrounding environment, which openings are located on one side of the housing (1),
e) an attachment (13) for guiding the inlet and outlet air to and from the air exchange openings (2, 3) of the housing (1),
f) the housing inner ribs (6) being V-shaped and having reinforcing ribs.

2. Internally air-cooled electric machine according to Claim 1, **characterized in that** a plurality of housing inner ribs (6) have a reduced rib height such that, in addition to the main direction of flow, tangential or helically running overflow channels (12) are produced.

3. Internally air-cooled electric machine according to Claim 2, **characterized in that** the tangential overflow channels (12) are located between adjacent cooling channels in the region of the end sides of the stator laminate stack (24).

4. Internally air-cooled electric machine according to one of the preceding claims, **characterized in that**, over the attachment (13), the inlet air flow can be directed onto at least one end side of the electric machine via at least one deflecting device (15), and the outlet air flow emerging over the length of the rotor or stator laminate stack (24) of the electric machine in the opposite direction of flow with respect to the inlet air flow entering the machine is located in a cutout (18) in the attachment (13), said cutout being located physically separate from the inlet air flow and above the electric machine and permitting virtually any desired outflow direction of the outlet air flow.

## Revendications

1. Machine électrique ventilée par de l'air qui la traverse, qui a les caractéristiques suivantes :
a) des canaux de refroidissement sensiblement axiaux entre un paquet ( 24 ) de tôles statorique et un carter ( 1 ), qui sont formés par des nervures ( 6 ) intérieures du carter s'étendant sensiblement axialement et s'appuyant sur le paquet ( 24 ) de tôles statorique,
b) des canaux ( 12 ) de débordement, qui sont disposés entre le paquet ( 24 ) de tôles statorique et le carter ( 1 ) et qui se trouvent entre les canaux de refroidissement sensiblement axiaux,
c) un paquet de tôle rotorique et/ou un paquet ( 24 ) de tôles statorique ayant des canaux ( 21, 23 ) de refroidissement sensiblement axiaux et/ou radiaux,
d) des ouvertures ( 2, 3 ) d'échange d'air avec l'atmosphère ambiante, qui se trouvent d'un côté du carter ( 1 ),
e) une coiffe ( 13 ) pour le guidage de l'air qui entre et qui sort sur les ouvertures ( 2, 3 ) d'échange d'air du carter ( 1 ),
f) dans laquelle les nervures ( 6 ) intérieures du carter sont en forme de V et ont des nervures de renfort.

2. Machine électrique ventilée par de l'air qui la traverse suivant la revendication 1, **caractérisée en ce que** plusieurs nervures ( 6 ) intérieures du carter ont une hauteur réduite, de manière à obtenir, outre la direction d'écoulement principal, des canaux ( 12 ) de débordement tangentiels ou s'étendant en forme de vis.

3. Machine électrique ventilée par de l'air qui la traverse suivant la revendication 2, **caractérisée en ce que** les canaux ( 12 ) tangentiels de débordement se trouvent entre des canaux de refroidissement voisins dans la zone des côtés frontaux du paquet ( 24 ) de tôles statorique.

4. Machine électrique ventilée par de l'air qui la traverse suivant l'une des revendications précédentes, **caractérisée en ce qu'**au-dessus de la coiffe ( 13 ) le courant d'air entrant peut être dévié sur au moins un côté frontal de la machine électrique par au moins un dispositif ( 15 ) de déviation, et le courant d'air sortant, en sens contraire sur la longueur du paquet ( 24 ) de tôle rotorique ou statorique de la machine électrique du courant d'air entrant dans la machine, se trouve dans un évidement (18) de la coiffe ( 13 ), séparé dans l'espace du courant d'air entrant et se trouvant au-dessus de la machine électrique, évidement qui autorise une direction de sortie à peu près quelconque du courant d'air qui sort.
